# EUROPÄISCHE PATENTANMELDUNG

(11) **EP 2 653 885 A1**
(43) Veröffentlichungstag der Anmeldung: **23.10.2013**
(21) Anmeldenummer: 12164554.3
(22) Anmeldetag: 18.04.2012
(51) Int. Cl.: G01S 7/497, G01S 7/486

(54) **Sensorsystem und Verfahren zur Vermessung der Übertragungseigenschaften einer Übertragungsstrecke eines Messsystems zwischen einem Sender und einem Empfänger**

(71) Anmelder: ELMOS Semiconductor AG, 44227 Dortmund (DE)
(72) Erfinder: Melcher, Dr. Rolf, 76227 Karlsruhe (DE); Krücke, Ludger, 58453 Witten (DE)
(74) Vertreter: Durm & Partner

(57) **Zusammenfassung**

Sensorsystem und Verfahren zur Vermessung der Übertragungseigenschaften einer ersten Übertragungsstrecke eines auf einer rückgekoppelten Kompensation beruhenden Messsystems (1) zwischen wenigstens einem Sender (102) und wenigstens einem Empfänger (104), wobei der Sender (102) ein Sendesignal (S25) in die Übertragungsstrecke hineinsendet, das nach Durchgang durch mindestens einen Teil der ersten Übertragungsstrecke von dem Empfänger (102) detektiert wird und ein Kompensationssender (106) ein Kompensationssignal (S23) in eine zweite Übertragungsstrecke hineinsendet, das von dem Empfänger (102) nach Durchgang durch die zweite Übertragungsstrecke detektiert wird. In dem Empfänger (102) überlagern sich das Sendesignal (S25) und das Kompensationssignal (S23) linear, so dass hier aus ihnen ein Empfängerausgangssignal (S1) gebildet wird, das im Folgenden zu einem Kompensatorspeisesignal (S3) weiterverarbeitet wird. Das Kompensatorspeisesignal (S3) wird im Kompensationssender (106) zur rückkoppelnden Regelung des Empfängerausgangssignals (S1) zugeführt. Mittels eines Steuergenerators (4) wird ein Steuersignal (S20) erzeugt, mit dem eine Signalgeneratoreinheit (2) angesteuert wird. Die Signalgeneratoreinheit (2) umfasst wenigstens einen Signalgenerator (3), der ein Speisesignal erzeugt, das dem Sender zugeführt wird. Das Speisesignal (S5) ist dabei abhängig von dem Steuersignal (S20), das von dem Steuergenerator (4) erzeugt wird. Das Empfängerausgangssignal (S1) wird mittels einer steuerbaren Filtereinheit (5), die wenigstens einen Filter (6) umfasst, gefiltert, bevor das Empfängerausgangssignal zum Kompensatorspeisesignal (S3) weiterverarbeitet wird. Diese Verarbeitung erfolgt bevorzugt mittels einer Verarbeitungseinheit (10).

## Beschreibung

Die vorliegende Erfindung betrifft ein Verfahren und ein Sensorsystem mit einem Sender, einem Kompensationssender und einem Empfänger zur Vermessung der Übertragungseigenschaften eines auf einer rückgekoppelten Kompensation beruhenden Messsystems. Der Sender sendet ein Sendesignal in die erste Übertragungsstrecke zwischen dem Sender und dem Empfänger hinein. Das Sendesignal wird nach Durchgang durch mindestens einen Teil der ersten Übertragungsstrecke von dem Empfänger detektiert. Der Kompensationssender sendet ein Kompensationssignal in eine zweite Übertragungsstrecke hinein, das von dem Empfänger nach Durchgang durch die zweite Übertragungsstrecke detektiert wird. In dem Empfänger werden das Sendesignal und das Kompensationssignal überlagert und zu einem Empfängerausgangssignal verarbeitet. Durch Weiterverarbeitung des Empfängerausgangssignals wird ein Kompensatorspeisesignal erzeugt, um den Kompensationssender derart zu speisen, dass eine rückkoppelnde Regelung des Empfängerausgangssignals erfolgt.

In vielen Anwendungsbereichen von Messsystemen muss ein Übertragungskanal von einem Sender zu einem Empfänger oder Sensor bestimmt werden. Beispielsweise kann es notwendig sein, die Entfernung eines Bezugsobjektes zu anderen Objekten zu bestimmen oder ein Objekt und dessen Bewegung zu erkennen. Beim Einsatz von optischen Systemen, wie etwa zur Abstandserkennung bei Fahrzeugen, kann beispielsweise die Amplitudendämpfung eines Lichtsignals zur Abstandsmessung herangezogen werden. Hier sind zahlreiche kompensierende Verfahren bekannt, bei denen das eigentliche Übertragungssignal mit einem kompensierenden Signal am Empfänger so überlagert wird, dass der Sensor bzw. Empfänger ein nahezu konstantes Signal in Summe empfängt. Beispiele für derartige Messsysteme sind in folgenden Dokumenten offenbart:
DE 10001955A1
DE 10024156A1
DE 19839730C1
DE 930983U1
DE 10001943C1
DE 10346741 B3
DE 102004025345B3
DE 102005013325A1
DE 102005010745B3
DE 102007005187B4

Allen Verfahren ist gemeinsam, dass das Kompensationssignal und/oder das Sendesignal des Senders ein in der Amplitude geregeltes Analogsignal ist und das Sendesignal ein konstantes Tastverhältnis hat. Viele Systeme verwenden ein im Wesentlichen monofrequentes Sendesignal.

Zur Realisierung derartiger Messsysteme werden häufig optische, kapazitive oder induktive Empfänger und Sensoren eingesetzt, die mit einem synchronen Demodulator als Empfänger arbeiten. Ein Vorteil der rückgekoppelten Messsysteme besteht darin, dass sie gegen Gleichstörungen, wie beispielsweise das Sonnenlicht bei optischen Messsystemen, nahezu unempfindlich sind. Allerdings zeigt sich immer wieder, dass Störungen im Bereich der Synchronfrequenz (sogenannte Inband-Störungen) und einem Vielfachen dieser Frequenz von dem System nicht kompensiert werden können. Derartige Einflüsse treten als Störung auf und verfälschen das Messergebnis, wie beispielsweise die Abstandsmessung.

Darüber hinaus wurden teilweise auch Einflüsse von Störern detektiert, deren Frequenz außerhalb der Synchronfrequenz liegt. Derartige Außerband-Störungen können bei einem entsprechend hohen Störpegel den Eingangsverstärker des Messsystems in die Sättigung treiben und dadurch den Empfang des Nutzsignals blockieren.

Aus den im Stand der Technik bekannten Problemen ergibt sich die Aufgabe, ein optimiertes Messsystem und ein optimiertes Verfahren vorzuschlagen, das sowohl gegen Inband-Störungen als auch gegen Außerband-Störungen unempfindlicher ist.

Gelöst wird die vorliegende Aufgabe durch ein Sensorsystem mit den Merkmalen des Anspruchs 1 sowie durch ein Verfahren mit den Merkmalen des Anspruchs 3.

Das erfindungsgemäße Sensorsystem umfasst einen Sender, einen Kompensationssender und einen Empfänger zur Vermessung der Übertragungseigenschaften einer ersten Übertragungsstrecke zwischen dem Sender und dem Empfänger. Dabei beruht das Sensorsystem auf einer rückkoppelnden Regelung des am Empfänger ausgegebenen Empfängerausgangssignals.

Der Sender ist derart ausgebildet und eingerichtet, dass er ein Sendesignal in die Übertragungsstrecke hineinsendet, das nach Durchgang durch mindestens einen Teil der ersten Übertragungsstrecke von dem Empfänger detektiert wird. Der Kompensationssender ist derart ausgebildet und eingerichtet, dass ein Kompensationssignal in eine zweite Übertragungsstrecke hineingesendet wird, das ebenfalls von dem Sender nach Durchgang durch die zweite Übertragungsstrecke detektiert wird. Im Empfänger werden das Sendesignal und das Kompensationssignal empfangen und linear, insbesondere summierend überlagert. Hieraus wird am Empfängerausgang ein Empfängerausgangssignal gebildet, das in einer Verarbeitungseinheit weiterverarbeitet wird.

Die Verarbeitungseinheit ist dazu ausgebildet und eingerichtet, das Empfängerausgangssignal zu einem Kompensatorspeisesignal für den Kompensationssender weiterzuverarbeiten. Das Kompensatorspeisesignal wird dann dem Kompensationssender zur rückkoppelnden Regelung des Empfängerausgangssignals zugeführt.

Das Sensorsystem umfasst einen Steuergenerator, der dazu ausgebildet und eingerichtet ist, um ein Steuersignal zu erzeugen. Dieses Steuersignal wird zur Ansteuerung einer Signalgeneratoreinheit verwendet und dieser zugeführt. Die Signalgeneratoreinheit umfasst mindestens einen Signalgenerator, der ein Speisesignal zur Speisung des Senders erzeugt und den Sender mit diesem Speisesignal speist. Das erzeugte Speisesignal ist dabei indirekt abhängig von dem Steuersignal.

Das erfindungsgemäße Sensorsystem umfasst weiterhin eine steuerbare Filtereinheit, die wenigstens einen Filter aufweist. Sie wird ebenfalls mittels des Steuersignals des Steuergenerators gesteuert, direkt oder indirekt. Die Filtereinheit ist zwischen dem Empfänger und der Weiterverarbeitungseinheit angeordnet, so dass das Empfängerausgangssignal vor der Weiterverarbeitung in der Weiterverarbeitungseinheit gefiltert wird. Die Filtereinheit kann auch Teil der Verarbeitungseinheit sein, insbesondere wenn das Sensorsystem oder Teile davon in einem IC oder ASIC integriert sind. Gleiches gilt für den Generator, die Generatoreinheit und/oder den Steuergenerator.

Selbstverständlich können in dem Sensorsystem nicht nur ein Sender, ein Empfänger und/oder ein Kompensationssender vorhanden sein. Es ist auch möglich, mehrere Sender, mehrere Empfänger und/oder mehrere Kompensationssender einzusetzen. Beispielsweise eignet sich die Verwendung von mehreren Sendern für eine Triangulationsmessung.

Die steuerbare Signalgeneratoreinheit kann auf mehrere Weisen technisch realisiert sein. In einer bevorzugten Ausführungsform umfasst die Signalgeneratoreinheit wenigstens einen Signalgenerator, der ein steuerbarer Signalgenerator ist. Bevorzugt wird der Signalgenerator mittels des Steuersignals gesteuert und erzeugt bevorzugt das Speisesignal für die Einspeisung des Senders in Abhängigkeit von dem Steuersignal. Dies kann direkt oder indirekt erfolgen.

Durch Steuerung des Signalgenerators kann die Signalform des erzeugten Speisesignals und/oder das Signalspektrum verändert werden. Beispielsweise kann der Signalgenerator bevorzugt ein bandbegrenztes Speisesignal erzeugen, das besonders bevorzugt derart gesteuert wird, dass die Bandbreite und/oder die Mittenfrequenz des Speisesignals mittels des Steuersignals des Steuergenerators verändert werden. Durch eine gesteuerte Anpassung der Bandbreiten und/oder Bandmittellagen des Speisesignals für den Sender und damit des ausgesandten Sendesignals lassen sich im Prinzip alle sogenannten Spread-Spektra-Verfahren auf ein derartiges Sensorsystem anwenden.

Wichtig bei der Abstimmung des Signalgenerators ist lediglich, dass die steuerbare Filtereinheit ebenfalls entsprechend gesteuert wird. Die Filtereinheit wird bevorzugt derart gesteuert, dass der Filter auf das Speisesignal bzw. das Sendesignal des Senders abgestimmt ist. Das Sendesignal oder Nutzsignal wird von dem Filter folglich durchgelassen. Dies kann auf unterschiedliche Arten erfolgen. Näheres wird im Folgenden noch ausgeführt.

In einer weiteren Ausführungsform des Sensorsystems umfasst die Signalgeneratoreinheit mehrere, wenigstens zwei, Signalgeneratoren und einen steuerbaren Umschalter. Auf diese Weise können die Signalgeneratoren derart geschaltet werden, dass jeweils das Speisesignal eines Generators an den Sender geleitet wird. Bevorzugt erzeugen die Signalgeneratoren unterschiedliche Speiseisignale, so dass durch geeignete Position des Umschalters der Sender mit einem gewünschten Speisesignal gespeist wird. Durch Umschaltung des Umschalters werden also jeweils andere Speisesignale an den Sender geleitet. Das Steuersignal des Steuergenerators ist also in diesem Fall ein Umschaltsignal, das das Schalten des Umschalters in eine andere, gewünschte Schaltposition initiiert.

In einer bevorzugten Ausführungsform ist das erzeugte Speisesignal ein monofrequentes Speisesignal, das gegebenenfalls ein getaktetes Signal ist und eine vorbestimmte Taktfrequenz aufweist. Bei derartigen Signalen eignet sich die Ausführungsform der Signalgeneratoreinheit mit Umschalter besonders.

Selbstverständlich ist es auch möglich, eine Signalgeneratoreinheit zu verwenden, die einen steuerbaren Signalgenerator umfasst, der ebenfalls ein monofrequentes Speisesignal erzeugt. In diesem Fall kann durch das Steuersignal des Steuergenerators die Frequenz des Speisesignals variiert werden.

Darüber hinaus ist es möglich, bei einer Signalgeneratoreinheit mit mehreren Generatoren und einem steuerbaren Umschalter einen oder mehrere Signalgeneratoren als steuerbare Signalgeneratoren auszubilden. Dies kann beispielsweise dann geeignet sein, wenn ein Signalgenerator lediglich einen bestimmten Frequenzbereich abdeckt, in dem er gesteuert werden kann. Um den Frequenzbereich der zu erzeugenden Speisesignale zu erhöhen, werden dann unterschiedliche Generatoren verwendet, die mittels eines steuerbaren Umschalters angesteuert werden können.

Wie oben bereits erwähnt, muss die steuerbare Filtereinheit an die gesteuerte Signalgeneratoreinheit angepasst werden. In einer bevorzugten Ausführungsform umfasst die steuerbare Filtereinheit einen steuerbaren Filter. Dieser wird bevorzugt mittels des Steuersignals gesteuert und ist so auf das Speisesignal abgestimmt, welches bevorzugt ebenfalls mittels des Steuersignals gesteuert ist.

In einer bevorzugten Ausführungsform ist der steuerbare Filter der Filtereinheit ein Bandpassfilter. Er lässt bevorzugt im Wesentlichen nur solche Signalanteile durch, die auf dem Speisesignal bzw. dem daraus generierten Sendesignal des Senders beruhen. Das Sendesignal oder Nutzsignal passiert den Filter, während die Störsignale mit Frequenzen außerhalb des Bandpasses mit einer Bandmittenfrequenz gleich der Nutzsignalfrequenz herausgefiltert werden. In einer bevorzugten Ausführungsform ist der Bandpassfilter schmalbandig. Seine Bandbreite wird in Abhängigkeit der Applikation eingestellt. Die Bandbreite kann abhängig von der Mittenfrequenz gewählt werden. In der Regel liegt die Bandbreite bei 5 % bis etwa 20 % der Mittenfrequenz, bevorzugt zwischen 5 % und 15 %, besonders bevorzugt bei 10 % ± 2 %.

Bevorzugt wird ein derartiger Filter mittels "Switch-Capacitor-Technik" aufgebaut, da hier die Mittenfrequenz des Filters proportional zur Taktfrequenz des Filters ist. Dadurch ist es auf einfache Weise möglich, die Durchlassfrequenz des Bandpassfilters an die Synchronfrequenz anzupassen, also an die Frequenz des Speisesignals. Bevorzugt wird dabei die Mittenfrequenz des Filters in Abhängigkeit von dem Steuersignal verändert.

Neben der Verwendung einer Filtereinheit mit einem gesteuerten Filter ist es auch möglich, mehrere Filter sowie einen steuerbaren Filterumschalter in der Filtereinheit vorzusehen. Der Filterumschalter schaltet dabei einen der Filter der Filtereinheit in den Verarbeitungspfad, so dass das Empfängerausgangssignal mittels des ausgewählten Filters gefiltert wird. Dabei kann eine Umschaltung von einem Filter zu einem anderen Filter erfolgen. Die Wahl des Filters ist auf das Speisesignal bzw. das Sendesignal des Senders abgestimmt.

Die Umschaltung des Filterumschalters erfolgt bevorzugt in Abhängigkeit von dem Steuersignal, das zur Ansteuerung der Signalgeneratoreinheit verwendet wird. Das Steuersignal des Steuergenerators ist also ein Filterumschaltsignal, das die Umschaltung des Filterumschalters in eine gewünschte Schalterstellung initiiert.

Selbstverständlich kann auch eine Filtereinheit aus mehreren Filtern aufgebaut werden, wobei einer oder mehrere dieser Filter als steuerbare Filter ausgeführt sein können. Somit lassen sich dann die beiden Verfahren, also Regelung eines Filters und Auswahl eines bestimmten Filters, miteinander kombinieren.

Im Rahmen der Erfindung wurde beispielsweise herausgefunden, dass bei optischen Sensorsystemen, die bei einer Synchronfrequenz f_{S} = 125 kHz arbeiten, Inband-Störungen bei herkömmlichen Messsystemen auftreten, deren Frequenz um 5 kHz oder einem Vielfachen davon von der Synchronfrequenz abweicht. Die Inband-Störfrequenz ist somit f_{IB} = f_{S} +/- n x 5 kHz, wobei n = 1, 2, 3, ... ist.

Derartige Störungen lassen sich durch geeignete Wahl des Speisesignals und dessen Frequenz sowie einen entsprechend angepassten Filter zur Filterung des Empfängerausgangssignals wirkungsvoll auf einfache Weise unterdrücken.

Auch konnte gezeigt werden, dass Außerband-Störungen wirkungsvoll reduziert werden können. Bei herkömmlichen Messsystemen, bei denen der Empfänger direkt in den Reflektor einer Neonröhre gerichtet ist, kann die Störamplitude derart hoch sein, dass die Verstärker des Empfangspfads in der Verarbeitungseinheit in die Sättigung getrieben werden. Dabei wurden vereinzelt Außerband-Störungen bei einer Frequenz von 90 kHz detektiert, die die Messung beeinflussten. Um derartige Außerband-Störungen zu unterbinden, wird der vor der Verarbeitungseinheit angeordnete Filter bevorzugt als Bandpassfilter ausgelegt. Der Bandpassfilter ist dabei so ausgelegt, dass seine Mittenfrequenz der Synchronfrequenz des Sendesignals entspricht, die die Arbeitsfrequenz des optischen Systems ist. Die Filterbreite wird derart angepasst, dass die Störsignale ausgefiltert werden. Ist es nicht möglich, die Filterbreite so stark zu reduzieren, dass eine effiziente Ausfilterung erfolgt, so wird eine Frequenzverschiebung der Arbeitsfrequenz des optischen Sensorsystems durchgeführt. Die Synchronfrequenz des Sendesignals wird also verschoben, ebenso die Mittenfrequenz des Bandpasses. Dadurch ist es möglich, den Bandpass so einzustellen, dass die Störungen (Außerbandstörungen) ausgefiltert werden. Häufig reicht es aus, einen Filter erster Ordnung zu realisieren. Alternativ kann ein Filter zweiter Ordnung oder höherer Ordnung verwendet werden.

In einer bevorzugten Ausführungsform umfasst das Sensorsystem einen Verstärker bzw. Vorverstärker zum Verstärken des Empfängerausgangssignals bevor dieses in der Verarbeitungseinheit weiterverarbeitet wird. Der Verstärker ist deshalb bevorzugt im Verarbeitungsablauf vor oder hinter der Filtereinheit angeordnet. Bevorzugt weist der Vorverstärker eine niedrige Verstärkung auf, damit der Verstärker durch das Signal nicht in die Sättigung gerät.

In einer bevorzugten Ausführungsform des Sensorsystems umfasst die Verarbeitungseinheit einen Demodulator, der bevorzugt als Quadraturdemodulator ausgeführt ist. Dieser demoduliert mit der Synchronfrequenz des Speisesignals das vorzugsweise verstärkte und vorzugsweise bandgefilterte Empfängerausgangssignal. Das demodulierte Signal steuert über einen Integrator die Amplitude und/oder Phase eines oder mehrerer Modulatoren, deren Trägerfrequenz der Synchronfrequenz entspricht. Die Modulatoren sind in dieser besonderen Ausführungsform die Signalgeneratoren der Signalgeneratoreinheit. Die Trägerfrequenz der Signalgeneratoren entspricht der Synchronfrequenz, die für die Demodulation verwendet wird.

In einer bevorzugten Ausführungsform der Verarbeitungseinheit umfasst diese einen Verstärker, der auch Empfangsverstärker genannt wird. Besonders bevorzugt umfasst die Verarbeitungseinheit einen Spitzenwertdetektor, der am Ausgang des Empfangsverstärkers und/oder am Ausgang des Demodulators angeordnet ist. Der Spitzenwertdetektor ermöglicht in einem bestimmten Zeitintervall die maximal auftretende Spannung zu messen.

Um das erfindungsgemäße Sensorsystem in einer Störumgebung einzusetzen, in der beispielsweise Emittenten getaktete infrarote Strahlung aussenden, die auf der Arbeitsfrequenz des Sensorsystems liegen, beispielsweise bei optischen Sensorsystem bei 125 kHz, wird zunächst überprüft, ob das verwendete Frequenzband mit der Mittenfrequenz des Sensorsystems störungsfrei ist. Hierzu wird der Signalgenerator, der beispielsweise ein Modulator sein kann, abgeschaltet. Der Filter der Filtereinheit wird auf die Mittenfrequenz des Sensorsystems eingestellt, so dass der Filter mit einem vorgegebenen Bandpass Signale dieser Frequenz durchlässt. Der Demodulator wird ebenfalls mit der Mittenfrequenz betrieben. Ist eine Störung vorhanden, so entsteht am Ausgang des Demodulators eine Gleichspannung oder eine Schwebung, die mit Hilfe des Spitzenwertdetektors erfasst wird. ist dieser Wert größer als ein vorbestimmter Grenzwert oder Schwellwert, so ist das Frequenzband gestört. Es wird daraufhin ein anderes Frequenzband untersucht, bis eine störungsfreie Arbeitsfrequenz gefunden wird. Ist ein störungsfreies Frequenzband gefunden, so wird die Messung mit dieser Frequenz durchgeführt.

Selbstverständlich ist es auch denkbar, einen Ablauf bei verschiedenen Frequenzbändern sequentiell nacheinander durchzuführen. Dazu werden verschiedene Frequenzbänder auf Störungsfreiheit untersucht. Anschließend werden die ungestörten Frequenzbänder hintereinander abwechselnd für eine Messung verwendet.

Die Messungen können auch ohne Überprüfung der Störungsfreiheit durchgeführt werden. Am Ende einer Sequenz werden die Messergebnisse dann verglichen und es wird per "Mehrheitsentscheid" festgestellt, welche Messung gestört war. Aus dem Stand der Technik sind adaptive Verfahren bekannt, bei denen die gestörten Frequenzen bei der nächsten Sequenz nicht mehr verwendet werden. Diese können bevorzugt in dem Sensorsystem eingesetzt werden.

In einer bevorzugten Ausführungsform des erfindungsgemäßen Verfahrens wird die Arbeitsfrequenz des Speisesignals in vorgegebenen Schritten, beispielsweise in 5 kHz-Schritten verändert. Dieses Frequenz-Hopping, beispielsweise in 5 kHz-Schritten, erfolgt bevorzugt bei optischen Systemen, deren Arbeitsfrequenz beispielsweise bei 125 kHz liegt. Durch das Frequenz-Hopping kann man den Störquellen, die in der Umgebung des Sensorsystems vorhanden sind, aus dem Weg gehen. Selbstverständlich muss die Mittenfrequenz des Filters der Filtereinheit ebenfalls dem gleichen Frequenz-Hopping unterliegen. Die Mittenfrequenz des Bandpassfilters muss entsprechend nachgeführt bzw. mitgeführt werden. Das Frequenz-Hopping in Kombination mit einem Bandpassfilter kann insbesondere bei Außerband-Störungen eingesetzt werden. Hierbei findet das Frequenz-Hopping häufig in größeren Schritten als den oben erwähnten 5 kHz-Schritten statt. Beispielsweise können 100 kHz- oder 1 MHz-Schritte verwendet werden. Der Bandpass wie auch die Arbeitsfrequenz des optischen Systems werden derart verschoben, dass der Bandpass auf der Störfrequenz effektiv arbeitet, d. h. die Störfrequenz herausfiltert. Eingesetzt werden können hier Filter erster oder zweiter Ordnung oder höherer Ordnung. So kann effizient verhindert werden, dass der Verstärker in der Verarbeitungseinheit durch die Außerband-Störungen in die Sättigung getrieben wird.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar. Es zeigen:
- Figur 1: ein schematisches Schaltbild eines rückgekoppelten Sensorsystems gemäß des Stands der Technik;
- Figur 2: eine Ausführungsform des erfindungsgemäßen Sensorsystems mit einer Frequenzkontrolle;
- Figur 3: eine weitere alternative Ausführungsform des erfindungsgemäßen Sensorsystems mit einem Bandpassfilter mit konstanter Zwischenfrequenz;
- Figur 4: eine alternative Ausführungsform des erfindungsgemäßen Sensorsystems mit einer Umschalteinrichtung.

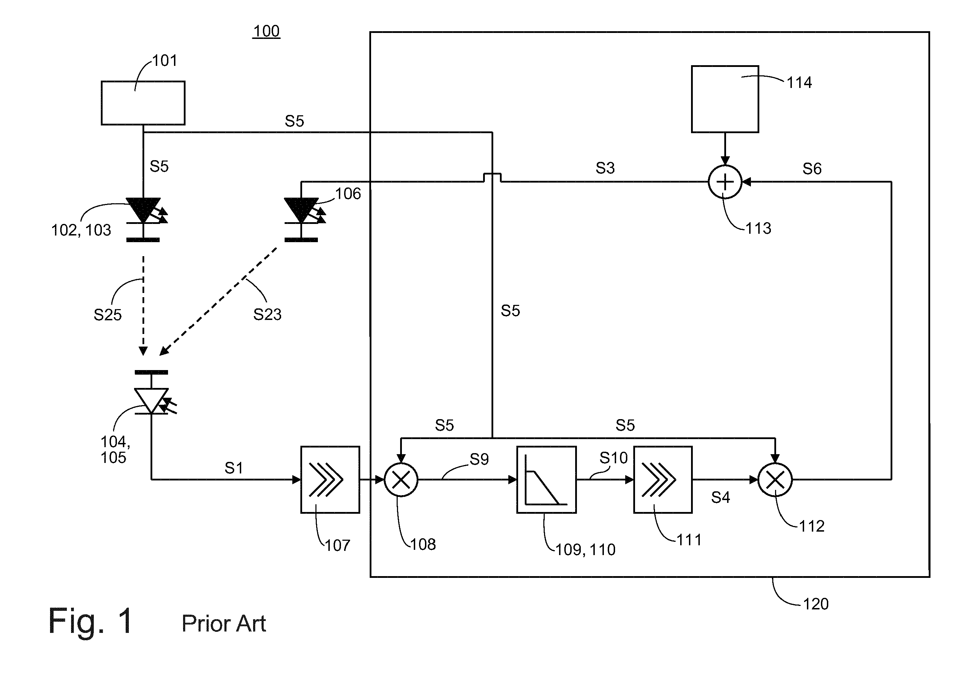

Fig. 1 zeigt ein übliches Messsystem 100 mit einer rückgekoppelten Kompensation, wie es beispielsweise für optische Systeme eingesetzt wird. Ein Signalgenerator 101 speist einen Sender 102, der als optische Sendediode 103 in dem gezeigten Beispiel ausgeführt ist. Der Sender 102 überträgt ein Sendesignal S25 zu einem als Photodiode 105 ausgebildeten Empfänger 104.

Ein Kompensationssender 106 sendet ein Kompensationssignal S23 an den Empfänger 104, das dort mit dem Sendesignal S25 des Senders 102 überlagert wird. Um die Übertragungseigenschaften der Übertragungsstrecke zwischen dem Sender 102 und dem Empfänger 104 zu ermitteln und beispielsweise Objekte in der Übertragungsstrecke zu detektieren, wird eine rückkoppelnde Regelung angewandt.

Das Empfängerausgangssignal S1 wird in einem Vorverstärker 107 verstärkt und anschließend mittels eines ersten als Multiplizierglied 108 ausgebildeten Demodulators mit dem Speisesignal S5 des Senders 102 multipliziert. Das Ausgangssignal S9 wird mittels eines Integrators 109, der beispielsweise als Tiefpassfilter 110 ausgelegt ist, integriert und anschließend in einem Verstärker 111 verstärkt. Somit erhält man typischerweise einen Amplitudenwert, der sehr niederfrequent, häufig ein DC-Wert oder nahezu ein DC-Wert ist. Dieses Ausgangssignal S4 wird in einem zweiten Demodulator demoduliert. Der Demodulator ist ein zweites Multiplizierglied 112, in dem das Ausgangssignal S4 mit dem Speisesignal S5 zu einem Vorsignal S6 multipliziert wird.

Bei Verwendung eines monofrequenten, getakteten Speisesignals S5 wird somit aus dem Ausgangssignal S4 ebenfalls ein getaktetes Ausgangssignal S6. Dies wird bevorzugt in einem Summierer 113 mit einem Biaswert summiert, der bevorzugt von einem Biasgenerator 114 erzeugt wird. Daraus wird das Kompensatorspeisesignal S3 gebildet, das dem Kompensationssender 106 zugeführt wird.

Das Messsystem 100 weist also eine Verarbeitungseinheit 120 auf, in der das Empfängerausgangssignal S1 weiterverarbeitet wird zu dem Kompensationsspeisesignal S3. Die Verarbeitungseinheit 120 umfasst bevorzugt, wie in Fig. 1 gezeigt, die Multiplizierglieder 108, 112, den Integrator 109 bzw. Tiefpass 110, den optionalen Verstärker 111 und optional das Summierglied 113 sowie auch optional den Biasgenerator 114. Die Verarbeitungseinheit 120 kann auch einen Demodulator umfassen.

Auf diese Weise kann eine rückgekoppelte Regelung erfolgen. Ein derartiges System wird im Stand der Technik auch als "Halios-System" bezeichnet. Allerdings ist dieses System störanfällig für Störer, die genau auf der Taktfrequenz des Signalgenerators arbeiten. Bei der Verwendung von monofrequenten getakteten Signalen wird dazu als Signalgenerator 101 ein Modulator verwendet, während das erste Multiplizierglied 108 einen ersten Demodulator bildet.

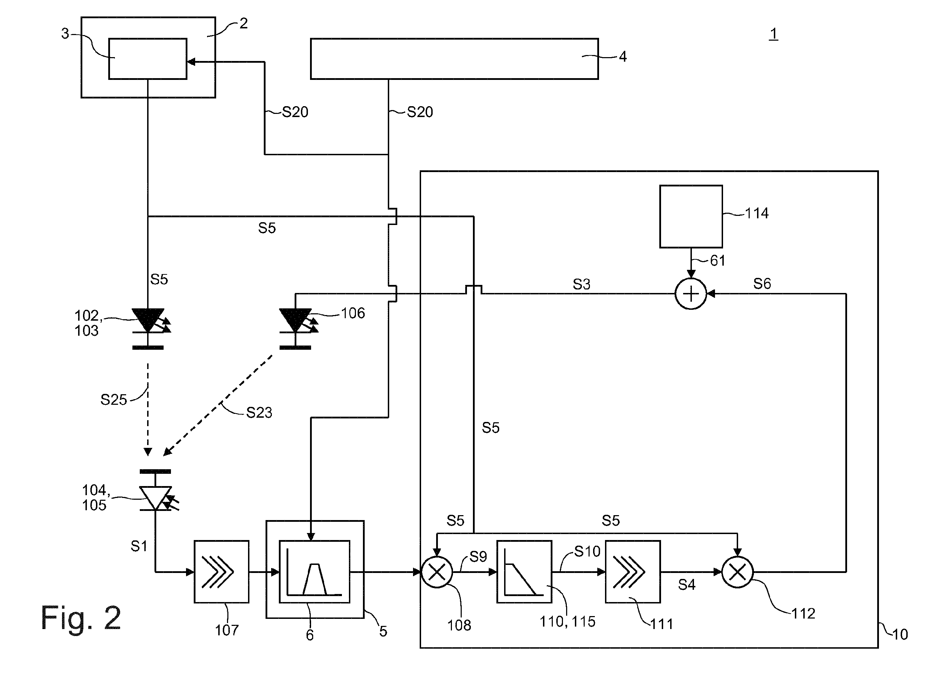

Fig. 2 zeigt eine Ausführungsform des erfindungsgemäßen Messsystems 1, das auch als Sensorsystem bezeichnet wird und das auf dem Messsystem des Stands der Technik 100 basiert. Die Erfindung wird hier anhand eines optischen Systems beschrieben. Selbstverständlich sind die Sender 102, 106 und der Empfänger 104 nicht auf optische Bauteile wie LEDs etc. beschränkt. Es lassen sich nahezu beliebige Sender und Empfänger verwenden, die in Abhängigkeit der zu untersuchenden Eigenschaften der Übertragungsstrecke gewählt werden.

Zusätzlich zu den bereits bekannten Komponenten umfasst das System 1 eine Signalgeneratoreinheit 2, die in der gezeigten besonderen Ausführungsform lediglich aus einem Signalgenerator 3 besteht. Der Signalgenerator 3 ist ein steuerbarer Signalgenerator, dessen Signalform veränderbar ist.

Ein Steuergenerator 4 erzeugt ein Steuersignal S20, mit dem die Signalgeneratoreinheit 2 bzw. im vorliegenden Fall der Signalgenerator 3 gesteuert wird. In Abhängigkeit des Steuersignals S20 wird die Signalform des Speisesignals S5 des Signalgenerators 3 verändert und angepasst. Dabei kann nicht nur die Frequenz eines monofrequenten Signals verändert werden. Es ist auch möglich und bevorzugt, die Bandbreite und Mittenfrequenz eines bandbegrenzten Speisesignals S5 zu regeln.

Das Messsystem 1 umfasst im Vergleich zum bekannten Messsystem 100 zusätzlich zu der Verarbeitungseinheit 120, den Sendern 102, 106 und dem Empfänger 104 eine Filtereinheit 5, die in der besonderen Ausführungsform gemäß Fig. 2 lediglich aus einem Filter 6 besteht. Der Filter 6 ist ein steuerbarer Filter, dessen Filterkurve in Abhängigkeit des Steuersignals S20 geregelt werden kann. Insbesondere ist der Filter 6 ein Bandpassfilter, der besonders bevorzugt schmalbandig ausgeführt ist. Die Mittenfrequenz des Filters 6 lässt sich dann auf einfache Weise in Abhängigkeit von dem Steuersignal S20 variieren. Dabei ist der Filter 6 stets auf dem Signalgenerator 3 abgestimmt, damit der Filter 6 im Wesentlichen nur solche Signalanteile durchlässt, die auf dem Speisesignal S5 und somit auf dem Sendesignal S25 beruhen.

Bei gängigen optischen Messsystemen, bei denen der Sender 102, der Empfänger 104 und der Kompensationssender 106 jeweils Photoelemente, z. B. LEDs, sind, liegt die Taktfrequenz bei Verwendung eines monofrequenten Speisesignals S5 im Bereich von ca. 100 kHz bis 1 MHz. Der Filter 6 wird in der Regel als Bandpassfilter zweiter Ordnung ausgelegt. Dabei ist die Bandbreite zwischen 5 % und 15 % der Nutzfrequenz, besonders bevorzugt etwa 10 % der Nutzfrequenz. Bei einer Taktfrequenz von 400 kHz für das Speisesignal S5 ergibt sich somit eine Bandbreite von bevorzugt etwa 10 kHz bis 40 kHz, besonders bevorzugt etwa 40 kHz. Die Bandbreite darf nicht zu gering gewählt werden, da andernfalls die Einschwingzeit des Systems 1 nicht akzeptabel große Werte annehmen kann.

In bevorzugter Weise ist der Filter 6 als SC-Filter (Switched-Capacitor-Filter) realisiert. Dieser Filter hat den Vorteil, dass sich die Bandbreite sehr genau einstellen lässt. Die Mittenfrequenz des Bandpasses lässt sich durch eine Taktung des Filters 6 auf einfache Weise anpassen. Dabei muss die Taktfrequenz deutlich höher sein als die Frequenz des Nutzsignals S25 bzw. S5, bevorzugt etwa um den Faktor 50 bis 100. Dies lässt sich jedoch schaltungstechnisch sehr einfach über einen Oszillator realisieren.

Alternativ kann der Filter 6 als analoger Bandpass ausgebildet sein. Hierbei entsteht jedoch eine Abhängigkeit von den Absolutwerten des Widerstands und der Kondensatoren des Analogfilters. Die Genauigkeit ist dabei recht gering, so dass eine Kalibrierung des Filters notwendig ist. Insbesondere eignet sich ein analoger Bandpassfilter, wenn die Bandbreite und Mittenfrequenz vorherbestimmt sind.

Bevorzugt ist der Vorverstärker 107 in dem erfindungsgemäßen Messsystem 1 derart ausgelegt, dass seine Verstärkung gering ist. Bevorzugt ist der Verstärker 107 ein Transimpedanzverstärker, dessen Widerstand etwa im Bereich von 10 kΩ (Kilo-Ohm) bis 500 kΩ liegt, bevorzugt zwischen 50 kΩ und 200 kΩ, besonders bevorzugt etwa 100 kΩ. Eine derartige Verstärkung sorgt dafür, dass Empfangssignale, die im Rauschen liegen, weiterverarbeitet werden können.

In einer besonderen Ausführungsform weist das Sensorsystem 1 eine Verarbeitungseinheit 10 auf, die das erste Multiplizierglied 108, einen als Tiefpass 110 ausgelegten Filter 115, ein zweites Multiplizierglied 112 und optional, wie hier gezeigt, einen Verstärker 111 umfasst. Der Verstärker 111 ist in der Verarbeitungskette des Empfängerausgangssignals 1 hinter dem Filter 115 angeordnet.

Prinzipiell kann das Speisesignal S5 ein beliebiges Signal sein. Es kann ein multifrequentes Signal oder ein monofrequentes Signal oder ein moduliertes Signal sein. Bevorzugt ist es ein bandbegrenztes multifrequentes Signal. Mittels des ersten Demodulators oder Multiplizierglieds 108 wird das Speisesignal S5 mit dem Empfängerausgangssignal S1 multipliziert und anschließend in dem Filter 115 gefiltert. Bei einem bandbegrenzten multifrequenten Signal entspricht dies einer Skalarmultiplikation. Das Ausgangssignal wird bevorzugt mittels des Verstärkers 111 verstärkt und danach mittels des zweiten Multiplizierglieds 112 (Demodulator) mit dem Speisesignal S5 multipliziert. Dies entspricht im Wesentlichen einer Art Rücktransformation. Das erzeugte Vorsignal S6 wird bevorzugt zu einem Biaswert b1 addiert, der von dem Biasgenerator 114 erzeugt wird. Daraus wird das Kompensatorsteuersignal S3 gebildet, mit dem der Kompensationssender 106 gespeist wird.

In dem in Fig. 2 gezeigten Ausführungsbeispiel sind sowohl der Signalgenerator 3 wie auch der Filter 6 steuerbar, wobei beide mit dem gleichen Steuersignal S20 des Steuergenerators 4 gesteuert bzw. geregelt werden. Erfolgt beispielsweise durch das Steuersignal S20 ein Frequenz-Hopping, so wird sowohl das Speisesignal S5 wie auch die Mittenfrequenz des Filters 6 entsprechend verändert, so dass der Filter 6 stets Signalanteile durchlässt, die auf dem Speisesignal S5 beruhen.

In der hier gezeigten Ausführungsform erfolgt keine Rückkopplung des rückgekoppelten Amplitudenwertes auf das Sendesignal. Auch ist keine Rückkopplung des Integratorausgangs oder des Ausgangssignals des Verstärkers 111 vorgesehen. Dennoch ist es selbstverständlich möglich, auch den Sender 102 bzw. die Sendediode 103 zu regeln, was vorzugsweise mit dem Ausgangssignal S4 erfolgt. Dabei wird eine Rückkopplung auf den Signalgenerator 3 bzw. die Signalgeneratoreinheit 2 erzeugt.

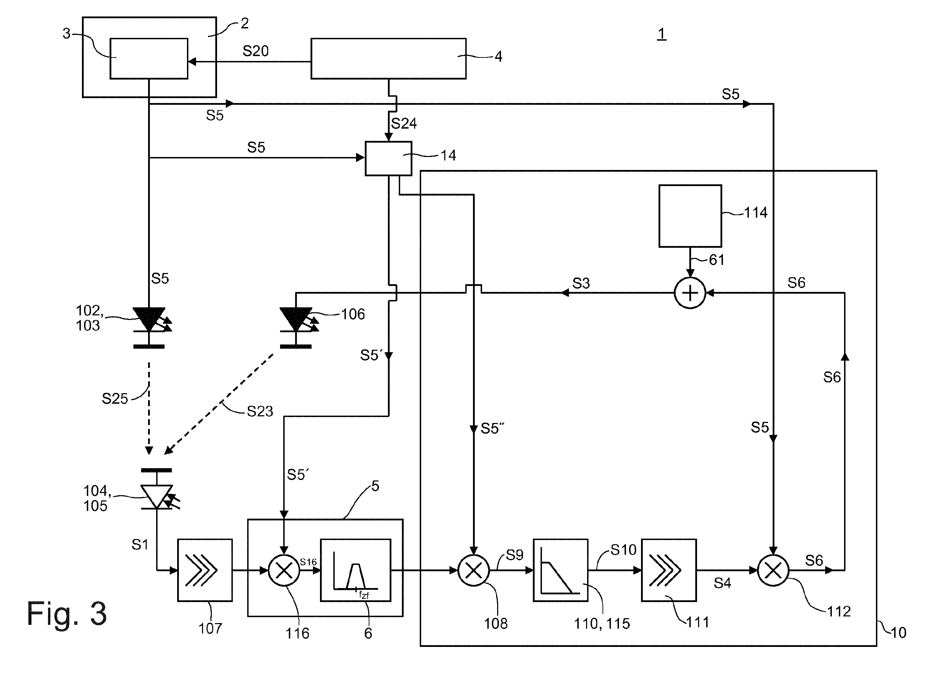

Fig. 3 zeigt eine alternative Ausführungsform des erfindungsgemäßen Sensorsystems, bei dem der Filter 6 in Form eines Bandpassfilters ausgebildet ist. Dabei wird der Bandpassfilter 6 auf eine feste Zwischenfrequenz f_{Zf} als Mittenfrequenz eingestellt. Der Bandpassfilter 6 arbeitet folglich unabhängig von der Synchronfrequenz f5 des Sendesignals S5, die die Arbeitsfrequenz des erfindungsgemäßen Sensorsystems ist. Der Filter 6 lässt sich dadurch einfacher konstruieren und unabhängig einstellen. Er muss nicht mitgeführt werden. Dies erlaubt eine kostengünstige und sehr exakte Filterdimensionierung.

Um dies zu verwirklichen, umfasst die Filtereinheit 5 einen weiteren Demodulator, in dem das optional verstärkte Empfängerausgangssignal S1 mit einem frequenzverschobenen Speisesignal S5' demoduliert wird. Bevorzugt ist der weitere Demodulator ein Multiplizierglied 116, in dem das verstärkte Signal S1 mit dem in seiner Frequenz verschobenen Sendesignal S5' multipliziert wird. Das frequenzverschobene Speisesignal S5' wird in einer Frequenzsteuereinheit 14 erzeugt. Dazu wird von dem Steuergenerator 4 ein Frequenzsteuersignal S24 an die Frequenzsteuereinheit 14 übermittelt. Dieses Frequenzsteuersignal S24 enthält auch Informationen über die Zwischenfrequenz f_{Zf} des Bandpassfilters 6.

Der Frequenzsteuereinheit 14 wird das Speisesignal S5 zugeführt, das die von dem Steuergenerator 4 vorgegebene Synchronfrequenz f5 umfasst. In der Frequenzsteuereinheit 14 wird nun das frequenzverschobene Speisesignal S5' erzeugt, dessen Frequenz (Demodulationsfrequenz) aus der Synchronfrequenz f5 abzüglich der Zwischenfrequenz f_{Zf} gebildet wird. Es ergibt sich somit für die Demodulationsfrequenz f_{d} = f5 - f_{Zf}.

Erfolgt nun ein Frequenz-Hopping dergestalt, dass die Synchronfrequenz f5 des Speisesignals S5 verändert wird, so wird auch die Demodulationsfrequenz f_{d} entsprechend verändert. Das Multiplizierglied 116 wird mit dem frequenzgeänderten Speisesignal S5' angesteuert. Das Frequenz-Hopping wird durch die steuerbare Signalgeneratoreinheit 2 realisiert, wie beispielsweise anhand von Fig. 2 beschrieben.

Das Ausgangssignal S16 des frequenzgesteuerten Demodulators 116 wird mit dem auf die Zwischenfrequenz f_{Zf} abgestimmten Bandpassfilter 6 gefiltert. Durch den Demodulator 116 erfolgt eine Projektion des optional verstärkten Empfängerausgangssignals S1 auf das auf die Demodulationsfrequenz f_{d} verschobene Speisesignal S5'. Hierdurch können Außerbandstörungen und Inbandstörungen effektiv herausgefiltert werden, da ihr Anteil außerhalb des Durchlassbereichs des Bandpassfilters 6 liegt.

Das gefilterte Empfängerausgangssignal S1 wird nun in dem ersten Demodulator, der das erste Multiplizierglied 108 ist, mit einem ebenfalls frequenzverschobenen Speisesignal S5" demoduliert, also multipliziert. Das Ausgangssignal des Bandpassfilters 6 wird mittels des Multiplizierglieds 108 und des auf die Zwischenfrequenz f_{Zf} verschobenen Speisesignals S5" auf die Frequenz f = 0 projiziert. Dies entspricht dem Detektionssignal S9.

Die Weiterverarbeitung des Detektionssignals erfolgt wie in Fig. 2 bereits beschrieben. Zunächst wird es in dem Tiefpassfilter 110 gefiltert. Das hieraus gebildete Projektionsbildsignal S10 wird mittels des Verstärkers 111 verstärkt und in dem zweiten Multiplizierglied 112 mit dem originären Speisesignal S5 multipliziert. Hierdurch erfolgt also eine Rücktransformation des gefilterten Anteils des Empfängerausgangssignals S1, das störungsfrei ist. Das durch die weitere Multiplikation im Multiplizierglied 112 gebildete Vorsignal S6 enthält die gesuchte Amplitudeninformation zur rückkoppelnden Regelung des Kompensationssenders 106.

In dieser Ausführungsform ist der Bandpass 6 ebenfalls derart gewählt, dass die Störfrequenzen und die Störsignale von Störern nicht durchgelassen werden, wobei die in dem Empfängerausgangssignal S1 enthaltenen Störanteile durch eine Verschiebung außerhalb der Filterbreite des Bandpasses 6 herausgefiltert werden. Die Zwischenfrequenz f_{Zf} bzw. das auf die Zwischenfrequenz f_{Zf} verschobene Speisesignal S5" kann zeitdiskret und/oder wertdiskret sein. Dies ist insbesondere bei einer jedenfalls teilweisen Digitalisierung des Sensorsystems vorteilhaft.

Die hier gezeigte Ausführungsform stellt eine sogenannte Zwischenfrequenzdemodulationsschaltung dar, bei der ein frequenznachgeführter Demodulator und ein auf einer festen Zwischenfrequenz f_{Zf} arbeitender Bandpassfilter verwendet werden. Dies hat den Vorteil, dass der Demodulator einfach an eine sich ändernde Synchronfrequenz des Speisesignals S5 angepasst werden kann. Zu beachten ist jedoch, dass bei der Zwischenfrequenzdemodulation die Phase der Signale nicht außer Acht gelassen werden darf, da sie jedenfalls teilweise bei der Signalverarbeitung zu berücksichtigen ist.

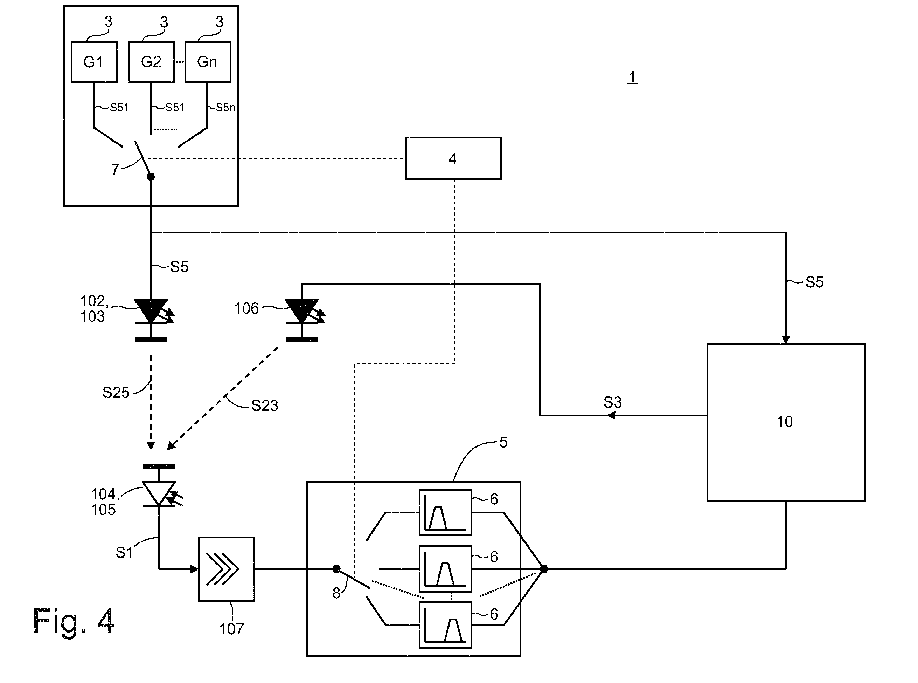

Fig. 4 zeigt eine alternative Ausführungsform des erfindungsgemäßen Sensorsystems 1, bei dem die Signalgeneratoreinheit 2 mehrere Signalgeneratoren 3 (G1, G2, ... Gn) umfasst. Jeder der Signalgeneratoren 8 (Gi) (i = 1 ... bis n) erzeugt ein Speisesignal S5i. Die Signalgeneratoreinheit 2 umfasst darüber hinaus einen Umschalter 7, mit dem einer der Generatoren 3 (G1, ... Gn) mit dem Sender 102 verbunden werden kann, so dass sein Speisesignal S5i (als S5) an den Sender 102 übermittelt wird. Der Umschalter 7 wird mittels des Steuersignals S20 des Steuergenerators 4 kontrolliert und gesteuert.

Die Filtereinheit 5 umfasst mehrere Filter 6 (F1, ... Fn) sowie einen Filterumschalter 8. Der Filterumschalter 8 wird ebenfalls durch das Steuersignal S20 des Steuergenerators 4 gesteuert und eingestellt. Somit ist es möglich, das Empfängerausgangssignal S1 des Empfängers 104 auf einen der Filter 6 (Fi, i = 1 ... n) zu schalten. Auch hier erfolgt die Filterumschaltung derart, dass der Filter 6 aktiv geschaltet wird, der solche Signalanteile durchlässt, die auf dem Speisesignal S5i des Signalgenerators 3 (Gi) beruhen.

Hierdurch ist es möglich, einen Signalgenerator 3 und einen korrespondierenden Filter 6 auszuwählen, die mit Frequenzen arbeiten, auf denen keine Störer strahlen.

Selbstverständlich ist es auch möglich, in der Generatoreinheit 3 einen regelbaren bzw. steuerbaren Signalgenerator 3 einzusetzen und in der Filtereinheit 5 zwischen mehreren Filtern 6 (Fi) umzuschalten. Es ist auch möglich, zwischen mehreren Generatoren 3 (Gi) umzuschalten und einen steuerbaren Filter 6 in der Filtereinheit 5 vorzusehen. Somit können die Ausführungsformen der Signalgeneratoreinheit 2 und der Filtereinheit 5 der beiden Varianten gemäß Fig. 2 und 4 beliebig miteinander kombiniert werden.

Selbstverständlich können auch mehrere gesteuerte Signalgeneratoren 3 als Generator Gi in einer Signalgeneratoreinheit 2 verwendet werden, zwischen denen dann mittels eines Umschalters 7 umgeschaltet werden kann. Genauso ist es möglich, einen oder mehrere steuerbare Filter 6 in der Filtereinheit 5 zu integrieren, zwischen denen umgeschaltet wird.

Es ist für den Fachmann selbstverständlich, dass auch Sensorsysteme aufgebaut werden können, die nicht nur mehrere Generatoren 3 oder mehrere Signalgeneratoreinheiten 2 umfassen, sondern optional und/oder alternativ mehrere Empfänger 104 und einen oder mehrere Filtereinheiten 5 aufweisen. Gleiches gilt für die Kompensationssender 106. Auch hier können mehrere Kompensationssender 106 verwendet werden.

Selbstverständlich können die Sensorsysteme gemäß der vorliegenden Erfindung nicht zur Bestimmung der Übertragungseigenschaften der Übertragungsstrecke allgemein verwendet werden, sondern auch zur Erfassung von Objekten in der Übertragungsstrecke, von Medien oder der Änderung von Medien innerhalb der Übertragungsstrecke zwischen Sender und Empfänger bestimmen. Es lassen sich auch mehrere Übertragungseigenschaften der Übertragungsstrecke detektieren. Solche können beispielsweise Brechungsindizes sein. Es ist jedoch auch möglich, mit dem System insbesondere die Objektdichte, die Objektgröße oder Objektzusammensetzung zu detektieren. Daneben kann von Objekten in der Übertragungsstrecke die Lage im Raum, der Abstand zum Empfänger oder die Objektorientierung erfasst werden. Die Bestimmung der Übertragungseigenschaften kann nicht nur optisch erfolgen, mit sichtbarem oder nicht sichtbarem Licht, infraroter Strahlung, Radarstrahlung oder ähnlicher Strahlung, sondern auch mit anderen Sendern und Empfängern, die entsprechend den zu ermittelnden Eigenschaften ausgewählt werden müssen. Derartige Sender und Empfänger können Antennen, Kontakte, Elektroden, Spulen, Hall-Sensoren, Kapazitäten, (fluidische) Ventile, LEDs, Photoempfänger, Drucksensoren, Mikrofone und Lautsprecher oder Ähnliches sein.

Mit dem erfindungsgemäßen Sensorsystem ist es auch möglich, die Transparenz oder Transmission von Werkstoffen oder Medien zu detektieren. Ebenso lässt sich die Dämpfung oder Absorption von Werkstoffen ermitteln. Das Verfahren eignet sich auch, um die Reflektivität oder Reflexion zu erkennen. Werden multifrequente bandbegrenzte Speisesignale eingesetzt, so lässt sich auch die Phasenverzögerung ermitteln, die durch Objekte oder beim Durchgang von Strahlung oder anderen physikalischen Größen durch ein Medium erfolgt. Es ist selbst möglich, Kernspinwechselwirkungen oder Kernspinresonanzen zu erfassen.

## Patentansprüche

1. Sensorsystem mit einem Sender (102), einem Kompensationssender (106) und einem Empfänger (104) zur Vermessung der Übertragungseigenschaften einer ersten Übertragungsstrecke zwischen dem Sender (102) und dem Empfänger (104), wobei
- der Sender (102) ausgebildet und eingerichtet ist, um ein Sendesignal (S25) in die Übertragungsstrecke hinein zu senden, das nach Durchgang durch mindestens einen Teil der ersten Übertragungsstrecke von dem Empfänger (104) detektiert wird,
- ein Kompensationssender (106) ausgebildet und eingerichtet ist, um ein Kompensationssignal (S23) in eine zweite Übertragungsstrecke hinein zu senden, das von dem Empfänger (104) nach Durchgang durch die zweite Übertragungsstrecke detektiert wird,
- der Empfänger (104) ausgebildet und eingerichtet ist, um das Sendesignal (S25) und das Kompensationssignal (S23) zu überlagern, insbesondere linear und/oder summierend und daraus ein Empfängerausgangssignal (S1) zu bilden,
- eine Verarbeitungseinheit (10), die dazu ausgebildet und eingerichtet ist, um das Empfängerausgangssignal (S1) zu einen Kompensatorspeisesignal (S3) für den Kompensationssender (106) weiterzuverarbeiten und um das Kompensatorspeisesignal (S3) zu dem Kompensationssender (106) zur rückkoppelnden Regelung des Empfängerausgangssignals (S1) zuzuführen;
**dadurch gekennzeichnet, dass**
- ein Steuergenerator (4) ausgebildet und eingerichtet ist, um ein Steuersignal (S20) zur Ansteuerung einer Signalgeneratoreinheit (2) zu erzeugen und das Steuersignal (S20) der Signalgeneratoreinheit (2) zuzuführen;
- die Signalgeneratoreinheit (2) wenigstens einen Signalgenerator (3) umfasst und in Abhängigkeit von dem Steuersignal (S20) ein Speisesignal (S5) erzeugt, mit dem der Sender (102) gespeist wird; und
- eine steuerbare Filtereinheit (5) wenigstens einen Filter (6) umfasst und das Empfängerausgangssignal (S1) vor der Weiterverarbeitung in der Verarbeitungseinheit (10) filtert.

2. Sensorsystem nach dem vorhergehenden Anspruch, **dadurch gekennzeichnet, dass** die Verarbeitungseinheit (10) einen ersten Demodulator, der bevorzugt ein erstes Multiplizierglied (108) ist, einen Filter (115), einen zweiten Demodulator, der bevorzugt ein zweites Multiplizierglied (112) ist und optional einen Verstärker (111) aufweist, der in der Verarbeitungskette des Empfängerausgangssignals (S1) hinter dem Filter (115) angeordnet ist, wobei bevorzugt in dem ersten Multiplizierglied (108) das Speisesignal (S5) mit dem Empfängerausgangssignal (S1) skalarmultipliziert, insbesondere multipliziert und anschließend in dem Filter (115) gefiltert, und dann optional verstärkt wird und danach in dem zweiten Multiplizierglied (112) erneut mit dem Speisesignal (S5) multipliziert wird, um das Kompensatorspeisesignal (S3) zu erzeugen.

3. Verfahren zur Vermessung der Übertragungseigenschaften einer ersten Übertragungsstrecke eines auf einer rückgekoppelten Kompensation beruhenden Messsystems (1) zwischen wenigstens einem Sender (102) und wenigstens einem Empfänger (104), wobei
- der Sender (102) ein Sendesignal (S25) in die Übertragungsstrecke hineinsendet, das nach Durchgang durch mindestens einen Teil der ersten Übertragungsstrecke von dem Empfänger (104) detektiert wird,
- ein Kompensationssender (106) ein Kompensationssignal (S23) in eine zweite Übertragungsstrecke hineinsendet, das von dem Empfänger (104) nach Durchgang durch die zweite Übertragungsstrecke detektiert wird,
- in dem Empfänger (104) sich das Sendesignal (S25) und das Kompensationssignal (S23) linear, insbesondere summierend, überlagern und daraus ein Empfängerausgangssignal (S1) gebildet wird,
- Weiterverarbeiten des Empfängerausgangssignals (S1) zu einen Kompensatorspeisesignal (S3) zum Speisen des Kompensationssenders (106);
- Zuführen des Kompensatorspeisesignals (S3) zu dem Kompensationssender (106) zur rückkoppelnden Regelung des Empfängerausgangssignals (S1);
**gekennzeichnet durch** die folgenden Schritte:
- Erzeugen eines Steuersignals (S20) mittels eines Steuergenerators (4) zum Ansteuern einer Signalgeneratoreinheit (2);
- Zuführen des Steuersignals (S20) zu der Signalgeneratoreinheit (2);
- Erzeugen eines Speisesignals (S5) mittels der Signalgeneratoreinheit (2) in Abhängigkeit von dem Steuersignal (S20);
- Speisen des Senders (102) mit dem Speisesignal (S5);
- Filtern des Empfängerausgangssignals (S1) mittels einer steuerbaren Filtereinheit (5) vor der Weiterverarbeitung des Empfängerausgangssignals (S1);
wobei die Signalgeneratoreinheit (2) wenigstens einen Signalgenerator (3) und die Filtereinheit (5) wenigstens einen Filter (6) umfasst.

4. Verfahren nach Anspruch 3, **dadurch gekennzeichnet, dass** der Schritt Weiterverarbeitung des Empfängerausgangssignal (S1) zu dem Kompensatorspeisesignal (S3) folgende Teilschritte umfasst:
- Multiplizieren des Empfängerausgangssignals (S1) mit dem Speisesignal (S5) und bilden eines Detektionssignals (S9);
- Filtern des Detektionssignals (S9) in einem Filter (115), so dass als gefiltertes Filterausgangssignal das Projektionsbildsignal (S10) erzeugt wird.
- Bilden eines auf dem Projektionsbildsignal (S10) basierenden Ausgangssignals (S4);
- Durchführen einer zumindest teilweisen Rücktransformation des Ausgangssignals (S4) mit dem Speisesignal (S5) derart, dass ein Vorsignal (S6) gebildet wird, wobei die Rücktransformation bevorzugt eine Multiplikation ist;
- Erzeugen eines Kompensatorspeisesignal (S3) aus dem Vorsignal (S6);
- Speisen des Kompensationssenders (106) mit dem Kompensationssignal (S3) zur rückkoppelnden Regelung des Empfängerausgangssignals (S1).

5. Sensorsystem nach Anspruch 1 oder 2 oder Verfahren nach Anspruch 3 oder 4, **dadurch gekennzeichnet, dass** der Signalgenerator (3) der Signalgeneratoreinheit (2) ein steuerbarer Signalgenerator ist, der bevorzugt mittels des Steuersignals (S20) gesteuert wird und der besonders bevorzugt das Speisesignal (S5) in Abhängigkeit von dem Steuersignal (S20) erzeugt.

6. Sensorsystem oder Verfahren nach dem vorhergehenden Anspruch, **dadurch gekennzeichnet, dass** der Signalgenerator (3) derart gesteuert wird, dass die Signalform des Speisesignal (S5) und/oder das Signalspektrum des Speisesignals (S5) verändert wird.

7. Sensorsystem oder Verfahren nach dem vorhergehenden Anspruch, **dadurch gekennzeichnet, dass** der Signalgenerator (3) ein bandbegrenztes Speisesignal (S5) erzeugt und bevorzugt derart gesteuert wird, dass die Bandbreite und/oder die Mittenfrequenz des Speisesignals (S5) veränderbar ist.

8. Sensorsystem oder Verfahren nach Anspruch 6, **dadurch gekennzeichnet, dass** der Signalgenerator (3) ein monofrequentes Speisesignal erzeugt und die Frequenz des Speisesignals (S15) mittels des Steuersignals (S20) variiert wird.

9. Sensorsystem oder Verfahren nach einem der vorhergehenden Ansprüche, **dadurch gekennzeichnet, dass** der Filter (6) der Filtereinheit (5) ein steuerbarer Filter ist, der bevorzugt mittels des Steuersignals (S20) gesteuert wird.

10. Sensorsystem oder Verfahren nach einem der vorhergehenden Ansprüche, **dadurch gekennzeichnet, dass** der Filter (6) ein Bandpass-Filter ist, der bevorzugt schmalbandig ist und im wesentlichen nur solche Signalanteile durchlässt, die auf dem Speisesignal (S5) beruhen.

11. Sensorsystem oder Verfahren nach dem vorhergehenden Anspruch, **dadurch gekennzeichnet, dass** die Mittenfrequenz des Filters (6) in Abhängigkeit des Steuersignals (S20) verändert wird.

12. Sensorsystem oder Verfahren nach einem der vorhergehenden Ansprüche, **dadurch gekennzeichnet, dass** die Generatoreinheit (2) mehrere Generatoren (3) und einen steuerbaren Umschalter (7) umfasst, so dass das von einem der Generatoren (3) erzeugte Speisesignal (S5) an den Sender (102) geleitet wird, wobei bevorzugt jeder der Signalgeneratoren (3) ein anderes, bevorzugt monofrequentes, Speisesignal (S5) erzeugt.

13. Sensorsystem oder Verfahren nach einem der vorhergehenden Ansprüche, **dadurch gekennzeichnet, dass** die Filtereinheit (5) mehrere Filter (6) und einen steuerbaren Filterumschalter (8) umfasst, so dass das Empfängerausgangssignal (S1) mittels eines der Filter (5) gefiltert wird und eine Umschaltung von einem Filter (6) zum anderen Filter (6) erfolgen kann.

14. Sensorsystem oder Verfahren nach Anspruch 13, **dadurch gekennzeichnet, dass** die Umschaltung des Filterumschalters (8) in Abhängigkeit von dem Steuersignal (S20) zur Ansteuerung der Signalgeneratoreinheit (2) erfolgt.

15. Sensorsystem oder Verfahren nach einem der vorhergehenden Ansprüche, **gekennzeichnet durch** einen Verstärker (107) zum Verstärken des Empfängerausgangssignals (S1), wobei der Verstärker (107) bevorzugt im Verarbeitungsablauf vor oder hinter der Filtereinheit (5) angeordnet ist.

16. Sensorsystem oder Verfahren nach einem der vorhergehenden Ansprüche, **gekennzeichnet durch**
- eine Frequenzsteuereinheit (14) mittels der ein erstes frequenzverschobenes Speisesignal S5' mit einer Demodulationsfrequenz f_{d} und ein zweites auf eine vorgegebene Zwischenfrequenz f_{Zf} verschobenes Speisesignal S5" erzeugt wird, wobei die Demodulationsfrequenz f_{d} aus der Synchronfrequenz f₅ des Speisesignals S5 und der Zwischenfrequenz f_{Zf} gebildet wird, bevorzugt **durch** Subtraktion,
wobei
- die steuerbare Filtereinheit (5) einen Demodulator (116) umfasst, der mittels des ersten verschobenen Speisesignals S5' gesteuert wird und der Filter (6) der Filtereinheit (5) auf die festvorgegebene Zwischenfrequenz f_{Zf} eingestellt ist und
- in dem ersten Multiplizierglied (108) das gefilterte Ausgangssignal der Filtereinheit (6) mit dem zweiten Speisesignal S5" multipliziert wird.
